# EUROPEAN PATENT APPLICATION

(11) **EP 3 511 387 A1**
(43) Date of publication of application: **17.07.2019**
(21) Application number: 18151966.1
(22) Date of filing: 16.01.2018
(51) Int. Cl.: C09J 175/04

(54) **EXTRUDABLE WATER-PROOF ADHESIVE AND/OR SEALANT**

(71) Applicant: CREATON AG, 86637 Wertingen (DE)
(72) Inventor: KRONENBERG, Bernd, 41844 Wegberg (DE)
(74) Representative: Vaeck, Elke

(57) **Abstract**

The present invention relates to water-proof adhesives and formulations thereof. The present invention further relates to methods for the production of such water-proof adhesives as well as uses of such water-proof adhesives, such as for instance but not limited to the building industry, more particularly the roofing industry.

In particular, the present invention provides extrudable water-proof adhesives at least comprising:
(i) at least one resin, wherein said resin is chosen from the group consisting of:
an acrylic resin, alkyd resin, epoxide polymer, polyurethane, polyvinylacetate, polybutene,
polyisobutene and/or a hydroxylated polyester resin,
and
(ii) at least one prepolymer, which prepolymer cures through the action of moisture, has groups that can be crosslinked by moisture, and is silyl-terminated,
said at least one prepolymer is chosen from the group consisting of polyurethane prepolymers, polyether prepolymers, polyolefin prepolymers, polybutadiene prepolymers, polyisoprene prepolymers, poly(styrenebutadiene) prepolymers, polychloroprene prepolymers, poly(acrylonitrile-butadiene) prepolymers, polysilicone prepolymers, and thermoplastic elastomer prepolymers, characterized in that said adhesive has a viscosity of between about 20 Pa·s (pascal second) and 50 Pa·s (pascal second) at 20°C.

## Description

### Field of the invention

The present invention relates to water-proof adhesives and/or sealants and formulations thereof. The present invention further relates to methods for the production of such water-proof adhesives and/or sealants as well as uses of such water-proof adhesives and/or sealants for instance, but i, the building industry, more particularly the roofing industry.

### Background of the invention

Adhesives and sealants are generally known in the art. As a rule, these adhesives and sealants are solvent and/or hydrous.

The solvent-based adhesives and sealants have the disadvantage that volatile organic compounds (VOCs) and pollute the environment and health.

A disadvantage of the adhesives and sealants on an aqueous basis is that they require longer times or more energy for setting and that the setting causes the dimensions to change as a result of shrinkage. When processing from the cartridge or foil bag, there is the additional risk that the bond seam can be washed out by water (rain). In addition, adhesives and sealants on an aqueous basis are sensitive to frost due to the aqueous mobile phase, which can be compensated only partially by additives. In unfavourable weather conditions, the setting process can be delayed very much.

In the building industry, butyl is the most widely used adhesive and sealant, e.g. for applying roofing accessories, such as ridge rolls and abutments, onto roofs.

However, in the past, different problems and difficulties have been encountered with the use of butyl.

First of all, butyl does not adhere to wet surfaces. This is in particular a major issue in the building sector, where building substrates often have humid or wet surfaces and thus need to be dried thoroughly each time prior to applying butyl.

Secondly, butyl does not harden and is characterized by a so-called "cold flow". The latter property essentially causes the glue to spread out very slowly under the force of gravity after its application. Accordingly, a material or element, which has been applied with butyl in most cases still needs to be fixed with additional mechanical fastening means.

From the above, it will thus be clear that, especially in the building industry, butyl acts more as a sealant against moisture whereas its adhesive function is rather limited.

Water-curable adhesives and sealants are known for instance from EP1724321. While these adhesives are moisture-proof, up to now, all known water-curable adhesives do not harden (or harden extremely slowly) and therefore are not suitable for application on and/or fixing of building products, such as for instance roofing accessories, onto a substrate, such as a roof. Often, these types of adhesives can only be supplied and applied by means of specialized cartridges.

### Summary of the invention

The object of the present invention is to provide an extrudable water-curable adhesive, which hardens shortly after application to a (potentially wet) substrate and accordingly does not have the above-mentioned disadvantages of the prior art adhesives.

In this regard, the present inventors have managed to develop a novel and inventive adhesive and/or sealant, which is water-curable as further described herein. In particular, it has been observed by the present inventors that even when the adhesive and/or sealant of the present invention is applied on moisture or wet surfaces and/or at temperatures below zero, it develops within a short time frame a strong initial adhesion to its substrate and subsequently over time gradually develops a permanent elastic, adhesive bond. In contrast to many prior art adhesives, the adhesive and/or sealant of the present invention does not comprise a plastic component, the latter of which has the disadvantage of resulting in the known phenomenon of "cold flow".

Furthermore, the present inventors have surprisingly been able to develop a method for the preparation of the water-curable adhesive and/or sealant according to the present invention, which method allows for the adhesive to be extruded in preformed profiles, like for instance on double-sided and one-sided adhesive tapes.

Accordingly, in a first aspect, the present invention provides an extrudable water-curable adhesive and/or sealant, which hardens shortly after application to a (potentially wet) substrate and accordingly does not have the above-mentioned disadvantages of the prior art adhesives.

In particular embodiments, the extrudable water-proof adhesive according to the present invention comprises:
(i) at least one resin, wherein said resin is chosen from the group consisting of:
   an acrylic resin, alkyd resin, epoxide polymer, polyurethane, polyvinylacetate, polybutene, polyisobutene and/or a hydroxylated polyester resin,
      and
(ii) at least one prepolymer, which prepolymer cures through the action of moisture, has groups that can be crosslinked by moisture, and is silyl-terminated,
   said at least one prepolymer is chosen from the group consisting of polyurethane prepolymers, polyether prepolymers, polyolefin prepolymers, polybutadiene prepolymers, polyisoprene prepolymers, poly(styrenebutadiene) prepolymers, polychloroprene prepolymers, poly(acrylonitrile-butadiene) prepolymers, polysilicone prepolymers, and thermoplastic elastomer prepolymers, characterized in that said adhesive has a viscosity of between about 20 Pa·s (pascal second) and 50 Pa·s (pascal second) at 20°C.

In particular embodiments, the viscosity of the adhesive and/or sealant system according to the present invention is generally between between 30 Pa·s and 100 Pa·s. The upper limit of the viscosity is determined by the fact that the adhesive and/or sealant system is still manageable.

In particular embodiments, said at least one resin is selected from the group of polyacrylates and polymethacrylates.

In further particular embodiments, said at least one resin is present in an amount of between about 10% and 80% by weight compared to the total weight of said adhesive.

In further particular embodiments, said at least one resin is present in an amount of between about 20% and 80% by weight compared to the total weight of said adhesive.

In particular embodiments, said at least one prepolymer is present in an amount of between about 1% and 40% by weight compared to the total weight of said adhesive.

In yet further particular embodiments, said at least one prepolymer is present in an amount of between about 5% and 15% by weight compared to the total weight of said adhesive.

In particular embodiments, said adhesive further comprises one or more additives.

In particular embodiments, said one or more additives comprise at least one crosslinking agent and/or curing agent, which cures said adhesive by means of ambient moisture.

In further particular embodiments, said crosslinking agent and/or curing agent is an aminosilane.

In further particular embodiments, said one or more additives comprise one or more organic fillers and/or one or more inorganic fillers.

In yet further particular embodiments, said one or more additives comprise silica flour.

In yet further particular embodiments, said one or more additives comprise at least one crosslinking agent and/or at least one dye and/or at least one plasticizer.

According to a second aspect, the present invention provides a formulation for preparing an extrudable water-proof adhesive having a has a viscosity of between about 20 Pa·s (pascal second) and 50 Pa·s (pascal second) at 20°C, where said formulation comprises:
(i) at least one resin, wherein said resin is chosen from the group consisting of:
   an acrylic resin, alkyd resin, epoxide polymer, polyurethane, polyvinylacetate, polybutene, polyisobutene and/or a hydroxylated polyester resin,
      and
(ii) at least one prepolymer, which prepolymer cures through the action of moisture, has groups that can be crosslinked by moisture, and is silyl-terminated,
said at least one prepolymer is chosen from the group consisting of polyurethane prepolymers, polyether prepolymers, polyolefin prepolymers, polybutadiene prepolymers, polyisoprene prepolymers, poly(styrenebutadiene) prepolymers, polychloroprene prepolymers, poly(acrylonitrile-butadiene) prepolymers, polysilicone prepolymers, and thermoplastic elastomer prepolymers,

In a third aspect, the present invention provides a substrate comprising a layer of the extruded water-proof adhesive on at least one of its surfaces. In particular embodiments, the present invention provides a substrate comprising a layer of the extruded water-proof adhesive on at least one of its surfaces, where the extruded water-proof adhesive is prepared with the formulation for preparing an extrudable water-proof adhesive having a has a viscosity of between about 20 Pa·s (pascal second) and 50 Pa·s (pascal second) at 20°C.

In particular embodiments, the viscosity of the adhesive and/or sealant system according to the present invention is generally between between 30 Pa·s and 100 Pa·s. The upper limit of the viscosity is determined by the fact that the adhesive and/or sealant system is still manageable.

In particular embodiments, the layer of the extruded water-proof adhesive is covered by a release liner.

In particular embodiments, the substrate is a building element or construction element.

In particular embodiments, the substrate is a roofing element.

In further particular embodiments, the substrate is a roofing accessory or a roofing component.

In yet further particular embodiments, the substrate is a roof ridge roll or a roof abutment.

In yet further particular embodiments, the substrate comprises the extruded water-proof adhesive on at least two of its opposite surfaces.

In a fourth aspect, the present invention provides a method for the preparation of an extrudable water-proof adhesive at least comprising the steps of:
a) Mixing at least one resin and at least one prepolymer, which prepolymer cures through the action of moisture, has groups that can be crosslinked by moisture, and is silyl-terminated,
   wherein said resin is chosen from the group consisting of:
   an acrylic resin, alkyd resin, epoxide polymer, polyurethane, polyvinylacetate, polybutene, polyisobutene and/or a hydroxylated polyester resin,
      and
   wherein said prepolymer is chosen from the group consisting of polyurethane prepolymers, polyether prepolymers, polyolefin prepolymers, polybutadiene prepolymers, polyisoprene prepolymers, poly(styrenebutadiene) prepolymers, polychloroprene prepolymers, poly(acrylonitrile-butadiene) prepolymers, polysilicone prepolymers, and thermoplastic elastomer prepolymers, and
b) Converting the mixture obtained in step a) by means of moisture air so as to obtain an extrudable water-proof adhesive having a visosity between about 20 Pa·s (pascal second) and 50 Pa·s (pascal second) at 20°C.

In particular embodiments, step a) of mixing said at least one resin and said at least one pre-polymer comprises a step-wise mixing, wherein the mixture is formed by step-wise adding small amounts of resin and small amounts of pre-polymer.

In particular embodiments, the present invention further comprises the step of extruding or profiling a layer of the extrudable water-proof adhesive of step b) to at least one surface of a substrate.

In a fifth aspect, the present invention provides an extrudable water-proof adhesive, obtainable by the methods of the present invention as described above.

In a sixth aspect, the present invention provides an extrudable water-proof adhesive, obtainable by the methods of the present invention as described above.

In a seventh aspect, the present invention provides the use of the extruded water-proof adhesive in the presence of moisture, high humidity or underwater. In particular embodiments, the present invention provide the use of a layer of the extruded water-proof adhesive on at least one of the surfaces of a wet or moisture substrate. In particular embodiments, the present invention provides the use of a layer of the extruded water-proof adhesive on at least one of the surfaces of a wet or moisture building element or construction element. In particular embodiments, the present invention provides the use of a layer of the extruded water-proof adhesive on at least one of the surfaces of a wet or moisture roofing element, roofing accessory or roofing component, such as for instance but not limited to a ridge roll or abutment.

The independent and dependent claims set out particular and preferred features of the invention. Features from the dependent claims may be combined with features of the independent or other dependent claims, and/or with features set out in the description above and/or hereinafter as appropriate.

The above and other characteristics, features and advantages of the present invention will become apparent from the following detailed description, taken in conjunction with the accompanying drawings, which illustrate, by way of example, the principles of the invention.

### Detailed description of the invention

It is to be noted that the term "comprising", used in the claims, should not be interpreted as being restricted to the means listed thereafter; it does not exclude other elements or steps. It is thus to be interpreted as specifying the presence of the stated features, steps or components as referred to, but does not preclude the presence or addition of one or more other features, steps or components, or groups thereof. Thus, the scope of the expression "a device comprising means A and B" should not be limited to devices consisting only of components A and B. It means that with respect to the present invention, the only relevant components of the device are A and B.

Throughout this specification, reference to "one embodiment" or "an embodiment" are made. Such references indicate that a particular feature, described in relation to the embodiment is included in at least one embodiment of the present invention. Thus, appearances of the phrases "in one embodiment" or "in an embodiment" in various places throughout this specification are not necessarily all referring to the same embodiment, though they could. Furthermore, the particular features or characteristics may be combined in any suitable manner in one or more embodiments, as would be apparent to one of ordinary skill in the art.

The following terms are provided solely to aid in the understanding of the invention.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps.

The recitation of numerical ranges by endpoints includes all numbers and fractions subsumed within the respective ranges, as well as the recited endpoints.

The term "about" as used herein when referring to a measurable value such as a parameter, an amount, a temporal duration, and the like, is meant to encompass variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" refers is itself also specifically, and preferably, disclosed.

The invention will now be further explained in detail with reference to various embodiments. It will be understood that each embodiment is provided by way of example and is in no way limiting to the scope of the invention. In this respect, it will be clear to those skilled in the art that various modifications and variations can be made to the present invention without departing from the scope or spirit of the invention. For instance, features illustrated or described as part of one embodiment, can be used in another embodiment to yield a still further embodiment. Thus, it is intended that the present invention covers such modifications and variations as encompassed within the scope of the appended claims and equivalents thereof.

The invention generally relates to a substantially solvent-free adhesive and sealant based on at least one anhydrous natural or synthetic resin, the process for its preparation and its use for bonding and sealing.

The invention is therefore based on the object of providing an adhesive and sealant, in particular for the construction sector, which is free or substantially free of volatile substances which pollute the environment. In addition, should the adhesive and sealant already at the beginning of the application have a high adhesive strength.

In particular, the present invention provides an extrudable water-proof adhesive, which can be used as an adhesive for a wide variety of substrates, even preferably in a moisture or wet environment.

Its advantageous properties of being water-curable as well as extrudable in any form, make the adhesive of the present invention a break-through product, which overcomes the different problems and difficulties, encountered in the past with the known adhesives.

In fact, the adhesive of the present invention does not suffer from the undesired "cold flow" characteristic of most prior art adhesives. Indeed, the known water-resistant adhesives often do not harden (fast enough) and tend to spread out under the force of gravity after their application.

In contrast, the adhesive of the present invention can be extruded in any suitable form and can thus be pre-applied to a substrate prior to its actual use as a glue. This is a major advantage over the water-proof prior art adhesives, which are not extrudable and should be stored in specialized cartridges and as such applied ad hoc. Moreover, the adhesive strength of the known adhesives is much lower than that of the adhesive of the present invention and therefore these cannot be used for fixing without using additional mechanical fastening means.

Accordingly, in a first aspect, the present invention provides an extrudable water-curable adhesive and/or sealant, which hardens shortly after application to a (potentially wet) substrate and accordingly does not have the above-mentioned disadvantages of the prior art adhesives.

In particular embodiments, the adhesive and/or sealant of the present invention is substantially solvent-free and is based on at least one anhydrous, natural or synthetic resin and can be profiled, for instance as a flat band and or as a round cord.

In further particular embodiments, the adhesive and/or sealant of the present invention is based on at least one solvent-free and anhydrous resin and at least comprises one moisture-curing component for bonding substrates, such as plastics, metal laminates (e.g. aluminium laminates), metal foils, films, wood, paper, cardboard, wallpaper, leather, felt, cork, textiles and/or metals to objects, such as but not limited to a building element, such as a cementitious building element or a building element made out of clay or concrete.

According to a first aspect of the invention, the adhesive and/or sealant is water-curable, can be extruded and at least comprises:
(i) at least one resin, wherein said resin is chosen from the group consisting of:
   an acrylic resin, alkyd resin, epoxide polymer, polyurethane, polyvinylacetate, polybutene, polyisobutene and/or a hydroxylated polyester resin,
      and
(ii) at least one prepolymer, which prepolymer cures through the action of moisture, has groups that can be crosslinked by moisture, and is silyl-terminated,
said at least one prepolymer is chosen from the group consisting of polyurethane prepolymers, polyether prepolymers, polyolefin prepolymers, polybutadiene prepolymers, polyisoprene prepolymers, poly(styrenebutadiene) prepolymers, polychloroprene prepolymers, poly(acrylonitrile-butadiene) prepolymers, polysilicone prepolymers, and thermoplastic elastomer prepolymers, characterized in that said adhesive has a viscosity of between about 20 Pa·s (pascal second) and 50 Pa·s (pascal second) at 20°C.

In particular embodiments, the viscosity of the adhesive and/or sealant system according to the present invention is generally between between 30 Pa·s and 100 Pa·s. The upper limit of the viscosity is determined by the fact that the adhesive and/or sealant system is still manageable.

Preferably, the moisture-curing action component is at least one prepolymer having groups which are cross-linked by means of moisture, in particular ambient or air humidity.

Particularly suitable pre-polymers to be used in the present invention are prepolymers which are selected from the group of polyurethane prepolymers, polyether prepolymers, polyolefin prepolymers, polybutadiene prepolymers, polyisoprene prepolymers, poly-styrene-butadiene prepolymers, polychloroprene prepolymers, poly-acrylonitrile-butadiene-prepolymers , polysilicone prepolymers, and thermoplastic elastomer prepolymers, which can be formed without vulcanization by injection molding. Preferably, the adhesives of the present invention and sealant polyurethane, polyether and / or polyolefin prepolymers.

In a preferred embodiment, the at least one prepolymer of the adhesive is silyl-terminated.

The adhesive according to the invention preferably has a content of about 1 to about 40 wt%, more preferably about 1 to about 30 wt%, most preferably about 5 to about 15 wt%, of at least one prepolymer based on the finished adhesive.

In particular embodiments, said at least one prepolymer is present in an amount of between about 1% and 40% by weight compared to the total weight of said adhesive.

In yet further particular embodiments, said at least one prepolymer is present in an amount of between about 5% and 15% by weight compared to the total weight of said adhesive.

The adhesive according to the invention is self-adhesive and cures without solvent or water vapors after application. It is therefore very well suited to be used in both renovation as well as new buildings, for example, in construction for sticking together a vapour barrier and other foils. Also, use in very damp rooms is possible. Even in well-sealed or damp rooms, virtually no moisture precipitation occurs. Furthermore, the adhesive, sealant system is environmentally friendly because it is substantially free of volatile, polluting substances.

The adhesive of the present invention comprises at least one resin, which can be natural or synthetic and modified or unmodified. Acrylic, alkyd, epoxy, polyurethane and/or polyvinylacatat resins are preferred. Particularly preferred are acrylic, epoxy and alkyd resins. Alternatively, particularly preferred are polybutenes, polyisobutenes and hydroxylated polyester resins. For instance, the AC Resin DS 3500 and Acronal 4F from BASF AG and the hydroxylated polyester resins Halwepol PE 45 and Habo-pin are VP E 450th are suitable for the invention.

The adhesive according to the invention preferably has a content of about 10 to about 80 wt.%, more preferably about 20 to about 80 wt % and most preferably about 40 to about 50 wt %, of at least one resin based on the finished adhesive.

In particular embodiments, said at least one resin is selected from the group of polyacrylates and polymethacrylates.

In further particular embodiments, said at least one resin is present in an amount of between about 10% and 80% by weight compared to the total weight of said adhesive.

In further particular embodiments, said at least one resin is present in an amount of between about 20% and 80% by weight compared to the total weight of said adhesive.

The ratio of prepolymer to resin in the novel adhesive and sealant is ideally 1: 3 to 1: 6, preferably 1: 4 to 1: 5, based on weight of the finished adhesive and sealant.

In particular embodiments, said adhesive further comprises one or more additives. The additives are present in an amount of 30 to 60 wt .-% based on the total weight of the adhesive and/or sealant system.

The additives may be present alone or as mixtures. In particular embodiments, the one or more additives may be present in the following amounts, in each case based on 100 parts by weight of finished material:
0 to 80 wt.-% of inorganic and/or organic fillers;
0 to 60 wt.-% plasticizer;
0 to 60 wt.-% tackifier;
0 to 80 wt.-% oligomeric and/or polymeric fillers;
0 to 20 wt.- % rheology modifiers (such as organic gums like xanthan or inorganic gums like bentonite clays);
0 to 15 wt.-% crosslinking agent;
0 to 10 wt.-% adhesion promoter and;
0 to 15 wt.-% stabilizers.

In yet further particular embodiments, said one or more additives comprise silica flour.

Thus, in particular embodiments, the one or more additives in the adhesive of the present invention comprise a crosslinking agent and/or curing agent, which cures said adhesive by means of ambient moisture.

Preferably, it performs the necessary strength for the inventive adhesive by means of a chemical reaction with the humidity.

Preferred crosslinking agents are compounds containing hydrolysable by moisture and / or crosslinking groups. These may be low molecular weight compounds and / or prepolymers. Particularly preferred crosslinking agents are primary, secondary or tertiary amino compounds which may also contain cross-linking groups, if necessary. Without restricting generality, the present invention preferred cross-linkers are for example the following aminosilanes γ-aminopropyltriethoxysilane (A-1100, GE Advanced Materials), γ-aminopropyltrimethoxysilane (A-1110, GE Advanced Materials), N-((β-aminoethyl) -γ-aminopropyl trimethoxysilane (A-1120, GE Advanced Materials), bis [γ-(trimethoxysilyl) propyl] amine (A-1170 / Y-9627, GE Advanced Materials), 4-amino-3,3-dimethyl-butyl-trimethoxysilane (A-1637 / Y-11637, GE Advanced Materials), γ-aminopropyl-methyl-diethoxy silane (A-2100, GE Advanced Materials).

In further particular embodiments, said crosslinking agent and/or curing agent is an aminosilane.

In further particular embodiments, said one or more additives comprise one or more organic fillers and/or one or more inorganic fillers.

Without loss of generality preferred inorganic fillers are quartz, precipitated or natural barium sulfate, titanium dioxide, precipitated or natural calcium carbonate (chalk for example), precipitated or natural kaolin, talc, magnesium or aluminum hydroxide (the latter hydroxides allow an adjustment of the fire class), zinc oxide, zirconium salts, glass beads or hollow microspheres of all types. Preferred organic fillers are for example resins based on hydrocarbon or Kolophoniurn basis, tall resin, balsam resin, terpenes, oligomers, such as for Example Butylene, acrylates or other vinyl-based molecules having a relatively low molecular weight, urethanes or esters with relatively low molecular weight or polymeric plasticizers, polyester-based, e.g. , B. Benzoflex. Organic fillers and polymeric fillers are suitable, such as impact modifiers, plastic fibers or plastic powder of, for example, polyacrylates, polystyrene, polyester, polyamide, polyurethane, polyvinyl chloride, polyolefins, polyvinyl acetate, polyisoprene or poly (iso) butylene, and block copolymers thereof.

The plasticizers are, according to DIN 55945 are liquid or solid inert organic substances of low vapor pressure. decrease because of their dissolving and swelling capacity to the hardness of the resin and the prepolymers or of the resulting prepolymer from the elastomeric macromolecule and change its adhesion. Suitable plasticizers are, for example, phthalates, adipates, citrates, phosphates, trimellitic acid or sulfonic acid.

The tackifiers are preferably rosin or hydrocarbon-based resins.

Preferred rheology modifiers are polyurethane thickeners, acrylate thickeners, cellulose thickeners, polyvinyl alcohol thickener, silicates, vinyl ether / maleic anhydride or polyethylene oxide.

Preferred stabilizers are sterically hindered phenols such as Irganox 110, antioxidant 330, or Cyanox 2246 which are used to increase the temperature stability, and sterically hindered phenols and/or sterically hindered amines such as Irganox 1076 or 1010 Tinuvin P, Tinuvin 326 or 770, or antioxidant 330, or modified titanium dioxide, which are used to increase the UV resistance.

In addition, the sealing composition of the invention may also comprise further conventional additives, such as biocides (preservatives) or dyes. Especially with pigments, a color of the sealant and adhesive according to the invention is quite possible.

Stabilizers are in particular used when acrylate-vinyl polymers with aliphatic monomers, such as. As vinyl acetate or butadiene, or aromatic monomers such. are as styrene or vinyl benzene may be used. In addition, it is preferred the use of non-hydrogenated tackifiers to add an additional amount of stabilizers to achieve the desired aging resistance.

The tackifiers, oligomeric fillers and other organic fillers have the task to improve the self-adhesiveness, cohesion, and water resistance of the adhesive and sealant.

By choosing the appropriate fillers and crosslinkers, optimal cohesion can be achieved by the skilled person, such as an adhesive formulator. This should still be sufficient in the construction sector between -20°C and +70°C. The skilled person can modify in this case the optimum cohesion by appropriate adjustment of the chain length of the at least one resin, the quantity and quality of the filler and crosslinking agent.

The additives are present in an amount of from about 0 to about 80 wt .-%, particularly from about 10 to about 70 wt .-%, most preferably from about 30 to about 60 wt .-% before, based on the adhesive and sealant.

In yet further particular embodiments, said one or more additives comprise at least one crosslinking agent and/or at least one dye and/or at least one plasticizer.

According to a second aspect, the present invention provides a formulation for preparing an extrudable water-proof adhesive having a viscosity of between about 20 Pa·s (pascal second) and 50 Pa·s (pascal second) at 20°C, where said formulation comprises:
(i) at least one resin, wherein said resin is chosen from the group consisting of:
   an acrylic resin, alkyd resin, epoxide polymer, polyurethane, polyvinylacetate, polybutene, polyisobutene and/or a hydroxylated polyester resin,
      and
(ii) at least one prepolymer, which prepolymer cures through the action of moisture, has groups that can be crosslinked by moisture, and is silyl-terminated,
said at least one prepolymer is chosen from the group consisting of polyurethane prepolymers, polyether prepolymers, polyolefin prepolymers, polybutadiene prepolymers, polyisoprene prepolymers, poly(styrenebutadiene) prepolymers, polychloroprene prepolymers, poly(acrylonitrile-butadiene) prepolymers, polysilicone prepolymers, and thermoplastic elastomer prepolymers,

In a third aspect, the present invention provides a substrate comprising a layer of the extruded water-proof adhesive on at least one of its surfaces. In particular embodiments, the present invention provides a substrate comprising a layer of the extruded water-proof adhesive on at least one of its surfaces, where the extruded water-proof adhesive is prepared with the formulation for preparing an extrudable water-proof adhesive having a viscosity of between about 20 Pa·s (pascal second) and 50 Pa·s (pascal second) at 20°C.

In particular embodiments, the layer of the extruded water-proof adhesive is covered by a release liner.

In particular embodiments, the substrate is a building element or construction element.

In particular embodiments, the substrate is a roofing element.

In further particular embodiments, the substrate is a roofing accessory or a roofing component.

In yet further particular embodiments, the substrate is a roof ridge roll or a roof abutment.

In further particular embodiments, the substrate is a component used for rain drainage or water drainage, such as a roofing component used for rain drainage or water drainage, such as guttering or guttering connectors.

In yet further particular embodiments, the substrate comprises the extruded water-proof adhesive on at least two of its opposite surfaces.

Since the adhesive of the invention adheres to almost all materials, such as polyolefins, papers, nonwovens, polyamides and polyesters, it can be applied in all cases where such materials, especially polyolefin materials find use. In particular, the adhesives of the present invention and sealant use in construction is, in profiles or baseboards. A particularly preferred application in the construction sector in the roof area is to connect a metal laminate, such as an aluminium laminate, to a solid surface, for example on (the ridge or abutment of) a roof, a wall made of wood, concrete, plaster, limestone, brick or concrete.

Suitable polyolefin materials are for example foils, wires, fibers and injection molded parts.

In addition, the adhesive sealant according to the invention is also liable in very damp environments or under water on non-absorbent surfaces. Therefore, it is also suitable to bond various materials, for example polyolefin materials under water or under conditions of high humidity for example tiles.

In a fourth aspect, the present invention provides a method for the preparation of an extrudable water-proof adhesive at least comprising the steps of:
a) Mixing at least one resin and at least one prepolymer, which prepolymer cures through the action of moisture, has groups that can be crosslinked by moisture, and is silyl-terminated,
   wherein said resin is chosen from the group consisting of:
   an acrylic resin, alkyd resin, epoxide polymer, polyurethane, polyvinylacetate, polybutene, polyisobutene and/or a hydroxylated polyester resin,
      and
   wherein said prepolymer is chosen from the group consisting of polyurethane prepolymers, polyether prepolymers, polyolefin prepolymers, polybutadiene prepolymers, polyisoprene prepolymers, poly(styrenebutadiene) prepolymers, polychloroprene prepolymers, poly(acrylonitrile-butadiene) prepolymers, polysilicone prepolymers, and thermoplastic elastomer prepolymers,
b) Converting the mixture obtained in step a) by means of moist air so as to obtain an extrudable water-proof adhesive having a visosity between about 20 Pa·s (pascal second) and 50 Pa·s (pascal second) at 20°C.

Mixing systems can be static or dynamic mixers. Advantageously, mixers are used with programmable speed control, so that the production process can be established. Preferably mixers are used at high rotation speeds, with the exact number of revolution is dependent on the composition of the adhesive and sealant. If highly viscous additives, such as waxes, are used, it is advantageous to heat it before mixing, thereby to facilitate mixing.

In particular embodiments, step a) of mixing said at least one resin and said at least one pre-polymer comprises a step-wise mixing, wherein the mixture is formed by step-wise adding small amounts of resin and small amounts of pre-polymer.

In further particular embodiments, step a) is performed in two or more sub-steps, wherein each substep comprises mixing small parts of resin with small parts of prepolymer and adding the obtained mixture to the mixture obtained in a preceding substep.

After conversion or curing, the adhesive and/or sealing material of the invention forms a highly viscous, elastic and permanently tacky mass. The curing or hardening usually occurs by means of humidity. As a result, in particular in new buildings, the humidity in closed rooms is reduced, which is advantageous, for example, when drying the screed or in rooms with very high humidity.

In addition, the adhesive and/or sealant system already at the beginning of the application has a high adhesive strength and does not show the typical features of aqueous dispersions, namely frost sensitivity and the tendency to leach after the application water (e.g. from rain).

In particular embodiments, the present invention further comprises the step of extruding or profiling a layer of the extrudable water-proof adhesive of step b) to at least one surface of a substrate.

The adhesive can be processed in a temperature range from -10°C to 60°C. The preferred processing temperature is between -5°C to 40°C.

The adhesive and/or sealant system can be profiled by means of a mechanical pumping device by means of shaping, i.e. extruded through a predefined cross-section.

Developmentally, this production unit can be divided into four functional parts:
1) Pump where shaping occurs
2) Coating part where pre-crosslinking occurs (transport1)
3) Cross separation (transport 2)
4) Winding (transport 3)

In detail, the functional apparatus parts can be described as follows:

### Pump unit with shaping

The following pumping/delivery units have shown to be suitable:
- pouring extruder
- pouring extruder with gear pump
- Double-barrel extruder, in the same direction
- Double-barrel extruder, in opposite directions
- Drum melter with screw pump
- Drum melter with gear pump

As molding modified extrusion dies, preferably modified slot dies are applied.

### Application unit with subsequent pre-crosslinking

In this application unit, which is a crucial unit for the preparation of the adhesive and/or sealant of the present invention, tempered, moist air is applied, which is essential for pre-crosslinking. This pre-cross-linking is essential for the dimensional stability of the profile in the further process.

### Cross-separation

For these components assemblies of the prior art may be used. Here, only the corresponding process parameters, such as holding time before the cross section, knife speed, cutting geometry of the knife and starting behaviour must be found.

### Double station winding

In this part, the process parameters such as web tension and winding tension must be determined. These are responsible for the quality (dimensional stability) of the profile of the finished rolls.

In a fifth aspect, the present invention provides an extrudable water-proof adhesive, obtainable by the methods of the present invention as described above.

In a sixth aspect, the present invention provides an extrudable water-proof adhesive, obtainable by the methods of the present invention as described above.

In a seventh aspect, the present invention provides the use of the extruded water-proof adhesive in the presence of moisture, high humidity or underwater. In particular embodiments, the present invention provide the use of a layer of the extruded water-proof adhesive on at least one of the surfaces of a wet or moisture substrate. In particular embodiments, the present invention provides the use of a layer of the extruded water-proof adhesive on at least one of the surfaces of a wet or moisture building element or construction element. In particular embodiments, the present invention provides the use of a layer of the extruded water-proof adhesive on at least one of the surfaces of a wet or moisture roofing element, roofing accessory or roofing component, such as for instance but not limited to a ridge roll or abutment.

The invention will now be further illustrated in detail with reference to the following Examples.

### EXAMPLES

It will be appreciated that the following examples, given for purposes of illustration, are not to be construed as limiting the scope of this invention. Although only a few exemplary embodiments of this invention have been described in detail above, those skilled in the art will readily appreciate that many modifications are possible in the exemplary embodiments without materially departing from the novel teachings and advantages of this invention. Accordingly, all such modifications are intended to be included within the scope of this invention that is defined in the following claims and all equivalents thereto. Further, it is recognized that many embodiments may be conceived that do not achieve all of the advantages of some embodiments, yet the absence of a particular advantage shall not be construed to necessarily mean that such an embodiment is outside the scope of the present invention.

### Example

### Preparation of an adhesive formulation according to specific embodiments of the present invention.

The formulation as shown in Table 1 was prepared as follows and used to profile an adhesive according to the present invention.

Resin and prepolymer were mixed together at room temperature. Subsequently, the filler, the crosslinker and possibly other components were mixed in. Then, a wax (e.g., Crayvallac Super) was added at elevated temperature (about 60 °C). Finally, the formulation was mixed and extruded under vacuum.

**Table 1**

| Formulation | | |
|---|---|---|
| | **Source** | **Weight%** |
| AC Resin DS 3500 | BASFAG | 39,99 |
| Polymer ST 65 | Hanse Chemie AG | 10,0 |
| Kreide Omya BLP3 | | 45,0 |
| Ultramarinblau | | 0,01 |
| Crayvallac Super | | 3,0 |
| Silan A1100 / AMEO | GE Advanced Materials | 2,0 |

## Claims

1. An extrudable water-proof adhesive at least comprising:
(i) at least one resin, wherein said resin is chosen from the group consisting of:
an acrylic resin, alkyd resin, epoxide polymer, polyurethane, polyvinylacetate, polybutene, polyisobutene and/or a hydroxylated polyester resin,
and
(ii) at least one prepolymer, which prepolymer cures through the action of moisture, has groups that can be crosslinked by moisture, and is silyl-terminated,
said at least one prepolymer is chosen from the group consisting of polyurethane prepolymers, polyether prepolymers, polyolefin prepolymers, polybutadiene prepolymers, polyisoprene prepolymers, poly(styrenebutadiene) prepolymers, polychloroprene prepolymers, poly(acrylonitrile-butadiene) prepolymers, polysilicone prepolymers, and thermoplastic elastomer prepolymers, **characterized in that** said adhesive has a viscosity of between about 20 Pa·s (pascal second) and 50 Pa·s (pascal second) at 20°C.

2. The extrudable water-proof adhesive according to claim 1, wherein said at least one resin is selected from the group of polyacrylates and polymethacrylates.

3. The extrudable water-proof adhesive according to claims 1 or 2, wherein said at least one resin is present in an amount of between about 10% and 80% by weight compared to the total weight of said adhesive.

4. The extrudable water-proof adhesive according to claims 1 to 3, wherein said at least one prepolymer is present in an amount of between about 1% and 40% by weight compared to the total weight of said adhesive.

5. The extrudable water-proof adhesive according to claims 1 to 4, said adhesive further comprises a crosslinking agent and/or curing agent, which cures said adhesive by means of ambient moisture.

6. A formulation for preparing an extrudable water-proof adhesive having a viscosity of between about 20 Pa·s (pascal second) and 50 Pa·s (pascal second) at 20°C, where said formulation comprises:
(i) at least one resin, wherein said resin is chosen from the group consisting of: an acrylic resin, alkyd resin, epoxide polymer, polyurethane, polyvinylacetate, polybutene, polyisobutene and/or a hydroxylated polyester resin,
and
(ii) at least one prepolymer, which prepolymer cures through the action of moisture, has groups that can be crosslinked by moisture, and is silyl-terminated, said at least one prepolymer is chosen from the group consisting of polyurethane prepolymers, polyether prepolymers, polyolefin prepolymers, polybutadiene prepolymers, polyisoprene prepolymers, poly(styrenebutadiene) prepolymers, polychloroprene prepolymers, poly(acrylonitrile-butadiene) prepolymers, polysilicone prepolymers, and thermoplastic elastomer prepolymers.

7. A substrate comprising a layer of the extruded water-proof adhesive according to any of claims 1 to 5 on at least one of its surfaces.

8. The substrate according to claims 7 or 8, wherein the layer of the extruded water-proof adhesive is covered by a release liner.

9. The substrate according to claims 7 to 9, wherein the substrate is a roofing element, a roofing accessory or a roofing component.

10. A method for the preparation of an extrudable water-proof adhesive at least comprising the steps of:
a) Mixing at least one resin and at least one prepolymer, which prepolymer cures through the action of moisture, has groups that can be crosslinked by moisture, and is silyl-terminated,
wherein said resin is chosen from the group consisting of:
an acrylic resin, alkyd resin, epoxide polymer, polyurethane, polyvinylacetate, polybutene, polyisobutene and/or a hydroxylated polyester resin,
and
wherein said prepolymer is chosen from the group consisting of polyurethane prepolymers, polyether prepolymers, polyolefin prepolymers, polybutadiene prepolymers, polyisoprene prepolymers, poly(styrenebutadiene) prepolymers, polychloroprene prepolymers, poly(acrylonitrile-butadiene) prepolymers, polysilicone prepolymers, and thermoplastic elastomer prepolymers,
b) Converting the mixture obtained in step a) by means of moisture so as to obtain an extrudable water-proof adhesive having a viscosity between about 20 Pa·s (pascal second) and 50 Pa·s (pascal second) at 20°C.

11. The extrudable water-proof adhesive according to claims 1 to 5, which is obtainable by the method according to claim 10.

12. Use of the extrudable water-proof adhesive according to claims 1 to 7 or of the formulation according to claim 6 for the adhesion of a building element or construction element.

13. Use according to claim 12 for the adhesion of a roofing element, roofing accessory or roofing component, preferably a ridge roll or an abutment.

14. Use of the substrate of claims 7 to 11 in the building industry.
